# EUROPEAN PATENT APPLICATION

(11) **EP 1 326 167 A2**
(43) Date of publication of application: **09.07.2003**
(21) Application number: 02025695.4
(22) Date of filing: 20.11.2002
(51) Int. Cl.: G06F 9/54

(54) **Method for processing events having hierarchical structure in communication equipment**

(30) Priority: 03.01.2002 KR 2002000268
(71) Applicant: SAMSUNG ELECTRONICS CO., LTD., Suwon-City, Kyungki-do (KR)
(72) Inventor: Kim, Ho-Sam, Suwon-city, Kyungki-do (KR)
(74) Representative: Grünecker, Kinkeldey, Stockmair & Schwanhäusser Anwaltssozietät

(57) **Abstract**

A method for processing events and reporting which events are presently occurring or are in a release state, the events being in a tree-type hierarchical structure. The process determines the state of each event along with the state of each event that the event points to. In the scenario that both a higher order event and a lower order event are both occurring, only the higher order event is reported to an operator.

## Description

The present invention relates to a method for operating communication equipment, and more particularly to a method for increasing a processing rate by selectively processing only higher priority events when more than one event occurs at one time.

An equipment operator should grasp an exact state of equipment in real-time for the sake of the maintenance and repair of development equipment. To do this, the equipment operator mounts an equipment management program on the development equipment.

A configuration of a program to be mounted is made up of many detailed features according to unique functions of the equipment. Communication equipment such as a multi-digital subscriber line access multiplexer (M-DSLAM) has to provide state information about communication data as well as about the equipment itself.

In order to provide the equipment operator with the state information, a process rate of the program is to be importantly considered in the communication equipment. In other words, the process rate has to be faster so that the state information is provided in the real-time. Further, when developing another equipment having functions similar to the equipment, a programmer has to consider that a program module of the equipment can be equally applied to another equipment through program modularization.

In a method for providing the equipment operator with the state information for data to be processed in the equipment, a state value of a register provided from a set of hardware chips for processing the data is read and the state value is reported to the equipment operator. However, it is recommended in an international standard document that only a highest-order event among events occurring simultaneously be reported. Thus, there is a problem where only the highest-order event among the events is processed. Such a problem has a correlation in that a performance of a central processing unit (CPU) embedded within a predetermined unit should be efficiently used. Also, the problem is determined by a configuration scheme of the program mounted on the CPU.

A method of processing only the highest-order event among the events having the hierarchical structure is that a lower-order event occurring simultaneously with a higher-order event is ignored when the higher-order event occurs after sequentially enumerating the higher/lower-order events from a higher-order event to a lower-order event at a design stage of the programs and programming a processor.

There is a structural limitation in that such a method should necessarily have a serial-type hierarchical structure of a higher/lower-order relationship among events. Therefore, when another event is added later on, all the programs related to the added event should be corrected to process the added event. However, respective events in the hierarchical structure do not necessarily exist in the higher/lower-order relationship and the respective events can also have an order relationship being equal to one another.

It is therefore an object of the present invention to provide an improvement in reporting event status to an operator.

It is another object to provide a method capable of increasing a process rate of a program for informing an equipment operator of state information for the data to be transmitted in real time by communication equipment.

It is a further object of the present invention to provide a method of reporting the state of events so that only the highest priority event is reported to an operator when more than one event is occurring simultaneously.

These and other objects can achieved by a method that reports which of a plurality of events are presently occurring or have previously occurred but are now in a release state. First, event information for the plurality of events are read. Event information includes an identification number that identifies each event and a pointer having a numerical identification number that points to an event having a higher priority or higher order. Each event is then processed in order. When an event is processed, it is determined 1) whether the event being processed is presently occurring or is in a release state, 2) what event number the event points to, 3) checking whether the event number being pointed to is presently occurring or is in a release state, 4) determining whether the event being pointed to points to yet another event of a higher priority. This process continues until 1) the highest priority event has been checked or 2) when a higher priority event is also simultaneously occurring or is simultaneously in a release state. The method repeats the above process for each one of the plurality of events. A check value in an event is set to "0" if the event is not presently occurring or is not presently set in a release state and there is no higher order events that have been checked that is also simultaneously occurring or are in a release state. A check value for the event is set to "1" if the event is either presently occurring or is in a release state and the event does not point to any higher order events that are presently occurring or are in a release state. After each one of the plurality of events have been processed, each event is printed out to an operator illustrating the event identification number and the check value. Depending on which process was run, the check value either indicates a presently occurring event or an event in a release state.

Thus, with this method, if a presently occurring event and a higher order event are both occurring or both in a release state, only the higher order event will be reported to the operator as presently occurring or in a release state. Thus, events that are pointed to by other events are checked prior to reporting the check value of an event to an operator, thereby preventing the report of an occurrence of an event or a release of an event when the event points to another higher order event that is presently occurring or is in a release state.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
Fig. 1 is a view illustrating an exemplary hierarchical structure of events to be processed by communication equipment;
Fig. 2 is a view illustrating an exemplary tree-type hierarchical structure of events to be processed by communication equipment for explaining the present invention;
Fig. 3A is a view illustrating a plurality of exemplary events for explaining the present invention;
Fig. 3B is a view illustrating a procedure of checking a higher-order event than a corresponding event when it is sequentially checked whether each event shown in Fig. 3A occurs;
Fig. 4 is a flow chart illustrating a procedure of processing events in accordance with the principles of the present invention;
Fig. 5A is a view illustrating previously occurred events in accordance with the principles of the present invention; and
Fig. 5B is a view illustrating a report to an operator of presently occurring events according to the principles of the present invention.

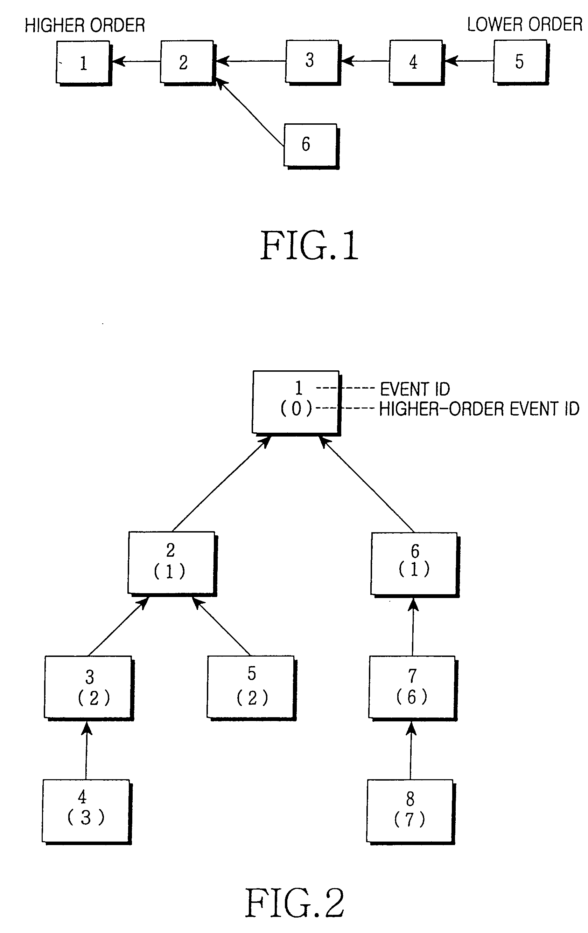

Fig. 1 is a view illustrating an exemplary hierarchical structure of events to be processed by communication equipment. In Fig. 1, each box denotes an event and a numeral of each box denotes a unique identification value of the event. As shown in Fig. 1, a third event is identified by the numeral 3 and a sixth event is identified by the numeral 6. Events 3 and 6 have the same priority. In such a scenario, a program process becomes complicated. In such a scenario, many resources of the CPU must be used to process the third event and the sixth event.

Fig. 2 is a view illustrating an exemplary tree-type hierarchical structure of events to be processed by communication equipment for explaining the present invention. In Fig. 2, each box denotes an event and an upper numeral contained in each box denotes an ID of the event. Also, lower numeral in parentheses contained in each box denotes another ID of another event having a higher priority than the event number in the upper numeral.

An algorithm for reporting the occurrence of events is carried out. The procedure is performed only once when equipment starts. Then the algorithm starts. This algorithm is already programmed. Therefore, no information needs to be restructured whenever each unit starts. A procedure of setting the relationship among the events will be described below.

Each event points to another event of a higher priority. In other words, each event contains data pertaining to identification of the event and an event identification of a higher priority in the hierarchical structure. Should an event be the highest priority event of the entire hierarchy, the event points to "0" as there is no event having an identification of "0", therefore indicating that that event is the highest priority event in the structure. When the relationship among respective events is schematized on the basis of these IDs, the schematized relationship of respective events in a hierarchy can be illustrated as in Fig. 2.

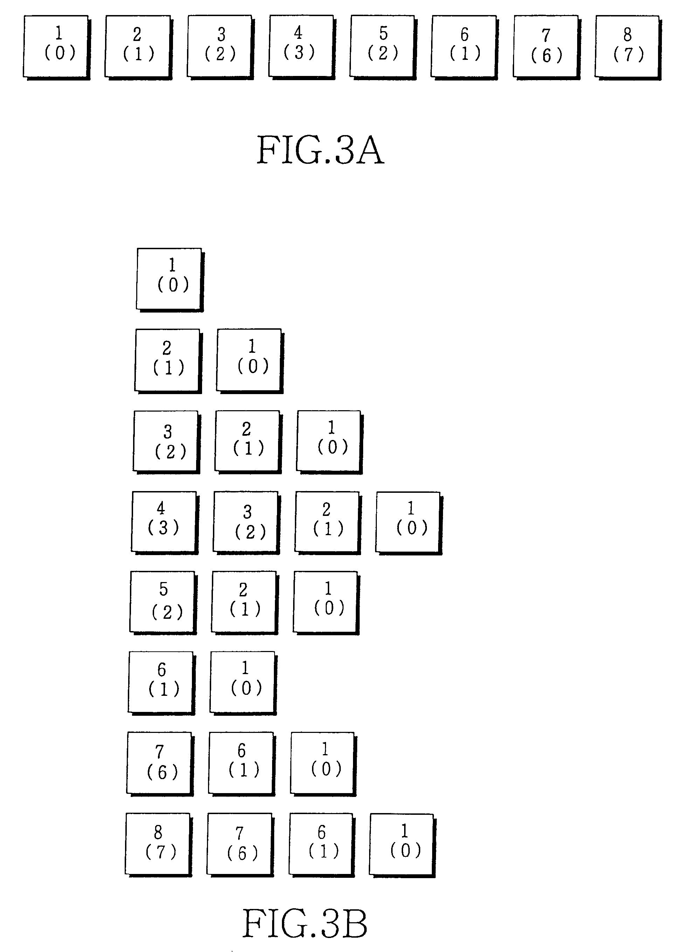

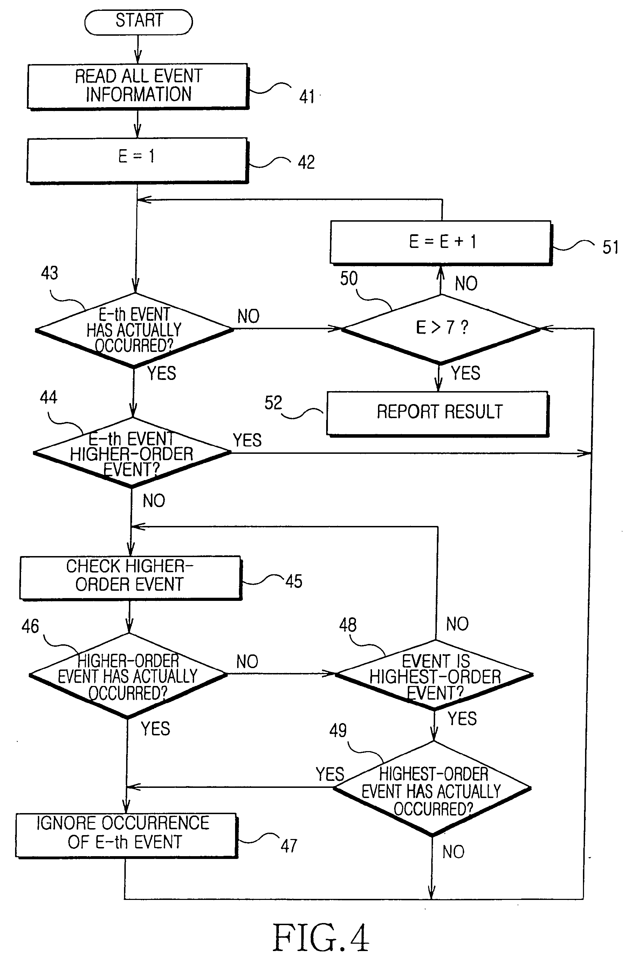

Fig. 3A is another diagram that illustrates the hierarchical relationship between the events illustrated in Fig. 2. Fig. 3B is yet another diagram expressing the same hierarchy of the same 8 events depicted in Figs. 2 and 3A. Fig. 4 is a flow chart illustrating the novel algorithm of reporting the occurrence of events to an operator in accordance with the principles of the present invention.

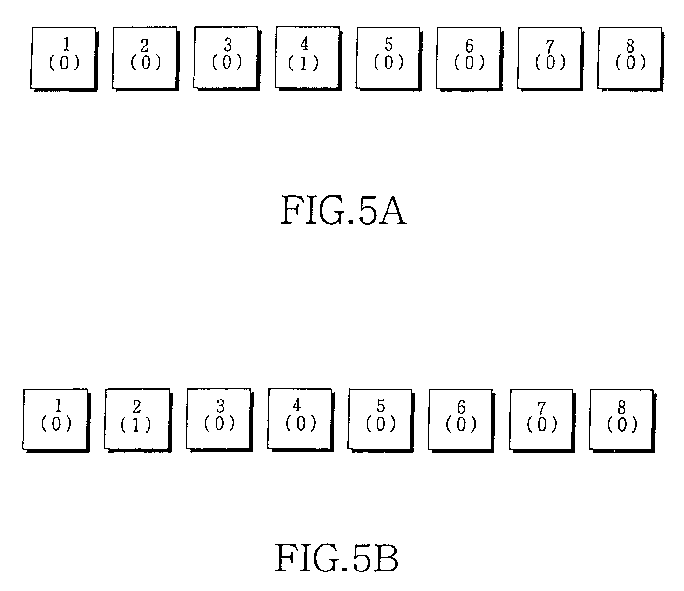

Fig. 5A illustrates a report on which event has previously occurred (or been released) while Fig. 5B illustrates a report on which event is presently occurring. The algorithm in Fig. 4 is used to produce reports similar to the one illustrated in Fig. 5B on events having the hierarchical structure of Figs. 2, 3A and 3B. It is to be appreciated that in Fig. 5A, the number in parenthesis has a different meaning than the number in parenthesis illustrated in Figs. 2, 3A and 3B. In particular, in Fig. 5A, the number in parenthesis is either a "1" or a "0" depending on whether the event has previously occurred or whether the event has not previously occurred, respectively. Similarly, the report illustrated in Fig. 5B is to be read differently than Figs. 2, 3A and 3B. In Fig. 5B, the number in parenthesis is either a "1" or a "0" depending on whether the event is presently occurring or not, respectively. Thus, the numbers in parenthesis in Figs. 5A and 5B take on a different meaning than the numbers in parenthesis in Figs. 2, 3A and 3B. It is assumed that there are eight events in Fig. 4. Further, it is assumed that a higher-order event than each event in Fig. 4 is the same as that in Fig. 3A and 3B. A result of a procedure of processing events at a previous time on illustrated in Fig. 5A and a result of a procedure of processing events at a present time is exemplarily shown in Fig. 5B. Fig. 4 illustrates a process for generating a reports similar to the on illustrated in Fig. 5B illustrating events currently occurring.

Fig. 4 will now be examined in the scenario where the report of Fig. 5B is generated, that is, where only event 2 is presently occurring. All event information is read in step 41. This information includes the event identification numbers and the next higher priority event number as in Figs. 2, 3A and 3B. In this embodiment, the event information includes first to eighth event information which includes the event identification number and an event identification number of an event having a higher priority than the event. The equipment initializes a variable E, indicating the identification number of the event currently being examined, to '1' in step 42. Thus, Fig 4 starts off by examining the first event. The equipment checks whether the E-th event, that is, the first event is presently occurring in step 43.

If the first event has not occurred at the above step 43, the process moves to step 53a where the first event is assigned a checked value of "0". Then, the control passes to step 50 to determine whether the E-th event is the last event to be examined. In this case, since the checking with respect to all the eight events has not occurred, the process advances to step 51 where the value of E is incremented and then the process returns to step 43. With E=2, step 43 checks whether the second event is presently occurring. If the second event is presently occurring, the control passes to step 44 to determine the presence of higher priority or higher order events.

In step 44, the process checks whether there is a more higher priority event than the second event. Since the event data of Figs. 2, 3A and 3B were loaded in at step 41, the process determines that the first event has a higher priority than the second event. In this scenario, the process passes to step 46 where it is checked whether this higher priority event (the first event) is presently occurring. Since event 1 is not presently occurring, the process moves to step 48 where it is determined whether this first event is the highest priority event. Since event 1 is the highest priority event of the 8 events, the process passes to step 57 where the E-th (or second) event is assigned a checked value of "1" indicating that the second event is presently occurring and that there are no higher priority events that are presently occurring. Then the control passes to step 50 to determine whether all 8 events have been examined and to step 51 to increment the variable E to 3 to examine the third event.

Up to now, the variable E has been '2'. The equipment recognizes that the variable E is less than '7' and then the procedure moves to step 51 and returns to the above step 43 after increasing the variable E by '1'. Then, the variable E becomes '3' and the equipment checks a third event at the above step 43. If the third event is not occurring, the checked value for the third event is then set to "0" in step 53a. Through repeated operations as described above, the checking for fourth to eighth events is completed and the presently checked values for the fourth to eighth events become '0', respectively. If the checking for the fourth to eighth event is completed, the variable E becomes greater than '7' and the equipment reports the result of Fig. 5B in step 52.

In the above example, step 46 was never answered with a "Yes" and step 53b was never executed. In other words, in the above example, there was no situation where a low priority event and a higher priority event pointed to by the lower order event are both simultaneously occurring. However, this is not always the case. For example, if both the first and the fourth events are presently occurring, the process of Fig. 4 would be as follows. As before, event "1" has a check value set to "1" because event "1" is presently occurring and there is no higher priority event than event 1. When E=4, step 43 determines that event 4 is actually occurring. Then the control moves to step 44 where it is determined that event 3 is the next higher priority event. The process cycles around steps 46-48-46 two times until step 46 determines that event 1 is presently occurring. In such a scenario, the checked value for event 4 is set to "0" in step 53b even though event 4 is presently occurring. The checked value for event 4 is set to "0" because there is another event, event 1, that is 1) presently occurring, 2) is of higher priority than event 4 and 3) is pointed to, either directly or indirectly by event 4. In this scenario, the check value of event 1 is set to "1" and the checked value of event 4 is set to "0" and these checked values are reported to the operator in step 52.

In one last example, it is illustrated that two events can have a checked value set to '1" and the same be reported to the operator in step 52. For example, assume that events 5 and 6 are both simultaneously occurring and events 1-4 and 7-8 are not presently occurring. When the step 46-48-46 loop is executed after it is found that event 5 is presently occurring, only events 2 and 1 are checked. Since neither events 1 or 2 are presently occurring, step 57 is executed and the checked value for event 5 is set to "1". Then event 6 is examined. Again, the step 46-48-46 loop is executed with only event 1 being checked. Since event 1 is not presently occurring, the checked value for event 6 is set to "1". Then, in step 52, both events 5 and 6 are reported to the operator as being presently occurring. This is because event 5 is not pointed to, either directly or indirectly, by event 6 and vice versa. As is illustrated in Fig. 2, event 1 is the only higher priority event than event 6 and events 2 and 1 are the only higher priority events pointed to by event 5 that are examined prior setting the checked value of event 5 to "1" in step 57.

In another embodiment, the process of Fig. 4 can be adapted to generate the report illustrated in Fig. 5A. By simply changing steps 43 and 46 to read "Has event... previously occurred" from "Is event ... presently occurring", Fig. 5A can be printed out in step 52 illustrating to the operator events that have previously occurred instead of events that are presently occurring.

As apparent from the above description, the present invention provides a method capable of increasing a process rate of a program for informing an equipment operator of state information for the data to be in a real-time transmitted by communication equipment. Further, a program module of the equipment can be equally applied to another equipment through a program modularization in accordance with the present invention.

## Claims

1. A method for processing events, each event containing a unique value of a higher-order event than its own event, comprising the steps of:
a) reading all event information and initializing an event designation variable E;
b) checking whether an E-th event corresponding to the event designation variable E has actually occurred, setting a presently checked value for the E-th event to a first value if the E-th event has actually occurred, inspecting the unique value of the higher-order event than the E-th event, and checking whether the E-th event is a highest-order event;
c) setting the presently checked value for the E-th event to a second value if the E-th event has not actually occurred and returning to the step b) after varying the event designation variable E so that the event designation variable E is designated as a next event;
d) checking the higher-order event than the E-th event if the E-th event is not the highest-order event and checking whether the higher-order event than the E-th event has actually occurred; and
e) ignoring an occurrence of the E-th event if the higher-order event than the E-th event has actually occurred, setting the presently checked value of the E-th event to the second value and returning to the step c).

2. The method as set forth in claim 1, further comprising the step of:
f) carrying out a comparison of a previously checked value and the presently checked value if the event designation variable E has been sequentially designated to all the events and reporting a comparison result.

3. The method as set forth in claim 2, wherein the reporting comprises the steps of:
g) reporting the occurrence of the E-th event if the previously checked value and the presently checked value of the E-th event are the first value and the second value, respectively, after the comparison of the previously checked value and the presently checked value on an event-by-event basis; and
h) reporting a release of the E-th event if the previously checked value and the presently checked value of the E-th event are the second value and the first value, respectively, after the comparison of the previously checked value and the presently checked value on an event-by-event basis.

4. A method of compiling a report regarding the present occurrence of events in a tree-type hierarchical structure, comprising the steps of:
reading event information for a first plurality of events;
initializing a variable to "1";
processing said first event, comprising the steps of:
determining whether the first event is presently occurring,
determining whether an event with a higher priority than the first event is presently occurring when said first event is presently occurring,
setting a check value of said first event to a first value when said first event is not presently occurring,
setting said check value of said first event to a second value when said first event is occurring and there are no events that are simultaneously occurring that have a higher priority than said first event,
setting said check value of said first event to said first value when said first event is occurring simultaneously with an event having a higher priority than said first event, and
incrementing said variable;
processing each one of a remainder of said plurality of events; and
reporting said check value for each event after each event of said remainder of said plurality of events has been processed.

5. The method of claim 4, wherein said event information comprises:
an identification number for each event; and
a higher priority event number for each event.

6. The method of claim 5, wherein said determining whether an event with a higher priority than the first event is occurring step comprises the steps of:
consulting said event information to determine a next higher priority event;
determining whether said next higher priority event is presently occurring; and
repeating the above until there is no higher priority event or when a higher priority event is found to be presently occurring.

7. A method of compiling a report regarding the release of events in a tree-type hierarchical structure, comprising the steps of:
reading event information for a first plurality of events;
initializing a variable to "1";
processing said first event, comprising the steps of:
determining whether the first event is in a release state,
determining whether an event with a higher priority than the first event is in a release state when said first event is determined to be in a release state,
setting a check value of said first event to a first value when said first event is not in a release state,
setting said check value of said first event to a second value when said first event is in a release state and there are no events in a release state that have a higher priority than said first event,
setting said check value of said first event to said first value when said first event is in a release state and an event having a higher priority is in a release state, and
incrementing said variable;
processing each one of a remainder of said plurality of events; and
reporting said check value for each event after each event of said remainder of said plurality of events have been processed.

8. The method of claim 7, wherein said event information comprises:
an identification number for each event; and
a higher priority event number for each event.

9. The method of claim 8, wherein said determining whether an event with a higher priority than the first event is in a release state comprises the steps of:
consulting said event information to determine a next higher priority event;
determining whether said next higher priority event is in a release state; and
repeating the above until there is no higher priority events or when a higher priority event is found to be in a release state.

10. The method of one of claims 7 to 9, wherein said release state of an event occurs immediately after said event occurs.

11. The method of one of claims 5, 6, 8 or 9, wherein an event having a higher priority than another event being only an event pointed to, either directly or indirectly, by said another event.
